# EUROPÄISCHE PATENTSCHRIFT

(11) **EP 2 705 740 B1**
(45) Veröffentlichungstag und Bekanntmachung des Hinweises auf die Patenterteilung: **02.12.2015**
(21) Anmeldenummer: 13401090.9
(22) Anmeldetag: 23.08.2013
(51) Int. Cl.: A01B 15/14, A01B 3/46

(54) **Drehpflug**
Reversible plough
Charrue brabant

(30) Priorität: 05.09.2012 DE 102012108229
(43) Veröffentlichungstag der Anmeldung: 12.03.2014
(73) Patentinhaber: Amazonen-Werke H. Dreyer GmbH & Co. KG, 49205 Hasbergen (DE)
(72) Erfinder: Laumann, Bernhard, 48477 Hörstel - Riesenbeck (DE); Resch, Rainer, 49170 Hagen a TW (DE)

(56) Entgegenhaltungen:
- EP-A1- 0 173 400
- EP-A2- 0 316 825
- DE-A1- 10 201 337
- DE-T2- 69 912 510

## Beschreibung

Die Erfindung bezieht sich auf einen Drehpflug mit einem an einem Anbaubock zur Verbindung des Drehpfluges mit einem landwirtschaftlichen Zugfahrzeug dreh- und/oder schwenkbar befestigbaren Pflugrahmen und mit auf gegenüberliegenden Seiten des Pflugrahmens angeordneten Pflugscharreihen mit Pflugkörpern, wobei durch eine über eine Antriebsvorrichtung eingeleitete Drehbewegung des Pflugrahmens wahlweise die eine oder die andere Pflugscharreihe in ihre Betriebsstellung oder in ihre Außerbetriebsstellung überführbar ist und wobei die Pflugkörper über Pflugkörperhalterungen an dem Pflugrahmen befestigt, zur Einstellung der Pflugarbeitsbreite in den jeweiligen Arbeitsstellungen um eine im wesentlichen lotrechte Achse schwenkbar am Pflugrahmen abgestützt und über einen eine Ausnehmung des Pflugrahmens durchsetzenden Hebel verstellbar sind.

Drehpflüge mit an gegenüberliegenden Seiten eines Pflugrahmens angeordneten Pflugscharreihen haben Pflugscharreihen, die auf der einen Seite rechtswendende Pflugkörper und auf der anderen Seite linkswendende Pflugkörper aufweisen, die jeweils wechselseitig bei einer Hinfahrt und bei einer Rückfahrt zum Einsatz kommen. Neben einer Antriebsvorrichtung, beispielsweise in Gestalt eines Drehzylinders ist der Pflug in die jeweilige Arbeitsstellung zu überführen. Für eine Arbeitsbreiteneinstellung kann darüber hinaus der Drehpflug mit einer besonderen Vorrichtung ausgerüstet sein, um in der jeweiligen Arbeitsstellung die Pflugarbeitsbreite anpassen zu können.

Ein Drehpflug der eingangs genannten Art mit einer Vorrichtung zur Einstellung der Pflugarbeitsbreite ist beispielsweise aus der DE 10 201 337 A1 und aus der EP 0 316 825 B1 bekannt. In beiden Druckschriften ist ein Drehpflug offenbart, bei dem zur Arbeitsbreitenverstellung den Pflugrahmen ein Hebel durchsetzt, der gelenkig mit einer Stellstange und einer Stellvorrichtung in Gestalt eines Hydraulikzylinders verbunden ist. Die Pflugkörper sind um Hochachsen von Gelenkstellen in der jeweiligen, mit dem Pflugrahmen verschweißten Pflugkörperhalterung verschwenkbar. Der jeweilige den Pflugrahmen durchsetzende Hebel ist seinerseits mit den Teilen der Pflugkörperhalterung verschweißt, die mit dem Pflugkörper verbunden sind. Aufgrund unvermeidbarer Fertigungstoleranzen kann es zwischen dem unbeweglich mit Teilen der Pflugkörperhalterung verbundenen Verstellhebel und der Pflugkörperhalterung zu Verspannungen und dadurch zu Dauerbrüchen kommen. Dies wirkt sich nachteilig auf die Standzeiten eines derartigen Drehpfluges aus.

Es ist Aufgabe der vorliegenden Erfindung, einen Drehpflug der eingangs genannten Art mit der Möglichkeit einer Arbeitsbreitenverstellung zu schaffen, der verschleißunanfälliger gestaltet ist.

Zur Lösung dieser Aufgabe zeichnet sich der Drehpflug der eingangs genannten Art dadurch aus, dass der die Ausnehmung des Pflugrahmens durchsetzende Hebel beweglich, insbesondere um eine in der Arbeitsstellung des Pflugkörpers im wesentlichen horizontal ausgerichete Achse schwenkbar mit zumindest einem Teil der Pflugkörperhalterung verbunden ist. Damit ist ein Drehpflug geschaffen, bei der der die Ausnehmung des Pflugrahmens durchsetzende Hebel, also in aller Regel ein Gestellhebel, mittels eines Bewegungen zulassenden Verbinders mit der Pflugkörperhalterung bzw. mit einem Teil der Pflugkörperhalterung verbunden ist. Diese Bewegung ist bevorzugt eine Schwenkbewegung um eine im Wesentlichen horizontal ausgerichtete Achse, so dass es zu Verspannungen zwischen dem Verstellhebel und der Pflugkörperhalterung nicht oder in nicht wesentlichem Ausmaße kommen kann. Damit ist die Gefahr von durch Verspannungen ausgelösten Dauerbrüchen wirksam verhindert.

Trotzdem baut der Drehpflug in dem Verbindungsbereich zwischen dem die Ausnehmung der Pflugrahmens durchsetzenden Hebel und der Anschlussverbindung zu der Pflugkörperhalterung bzw. zu Teilen der Pflugkörperhalterung einfach. Eine wirksame Befestigung des Pflugkörpers an der Pflugkörperhalterung und auch eine wirksame Befestigung der Pflugkörperhalterung an dem Pflugrahmen ist durch die Bewegungen zulassende Verbindung zwischen Verstellhebel und Pflugkörperhalterung nicht beeinträchtigt.

Besonders zu bevorzugen ist, wenn die horizontal ausgerichtete Achse, also die Schwenkachse zwischen Verstellhebel und dem Teil der Pflugkörperhalterung bzw. der Pflugkörperhalterung insgesamt, je nach Ausrichtung des Verstellhebels so ausgerichtet ist, dass diese im Wesentlichen parallel zu einer Seitenwandung des Pflugrahmens und damit auch zu einer Seitenwandung eines Teils der Pflugkörperhalterung gelegen ist, die sich an den Pflugrahmen anschließt. Dazu kann beispielsweise eine Hülsen/Gelenkbolzenhalterung zur Verbindung des Hebels vorgesehen sein, die die Achse zur Bewegung des Hebels gegenüber der Pflugkörperhalterung ausbildet. Die entsprechende Ausnehmung innerhalb des Pflugrahmens ist derart ausgebildet, dass sie zum einen die Bewegung des Verstellhebels für die Arbeitsbreitenverstellung und damit die Verschwenkung des Pflugkörpers um die lotrechte Achse zulässt, darüber hinaus jedoch auch eine entsprechende Hocherstreckung hat, um eine im Arbeitsbetrieb auftretende Bewegung des Verstellhebels um die im Wesentlichen horizontal ausgerichtete Achse zuzulassen, zumindest aber in einem derartigen Schwenkbereich, dass zu Dauerbrüchen führende Verspannungen zwischen Verstellhebel und der Pflugkörperhalterung nicht oder nicht in nennenswertem Maße auftreten. Gleichwohl bietet die entsprechende Ausnehmung nach oben und nach unten hin und auch seitwärts entsprechende Anschläge für den Hebel, so dass er nicht nach nach oben oder unten hin oder seitwärts ausbrechen kann.

Die Pflugkörperhalterung kann einteilig oder aber auch zwei- oder mehrteilig ausgebildet sein. Bevorzugt wird, wenn die Pflugkörperhalterung zunächst ein am Pflugrahmen angeordnetes Pflugkörperhalteteil aufweist, das beispielsweise eine zu der Ausnehmung des Pflugrahmens im Wesentlichen kongruente eigene Ausnehmung hat, so dass sie ebenfalls von dem Hebel zur Arbeitsbreitenverstellung durchsetzt werden kann. Das Pflugkörperhalteteil kann abgekröpfte, vom Pflugrahmen wegstehende Enden haben, an denen mit Abstand zueinander angeordnete Konsolen der Pflugkörperhalterung z.B. über Schraubverbindungen und einen Gelenkbolzen, der die lotrechte Achse ausbildet, befestigt werden können. Die mit Abstand zueinander angeordneten Konsolenteile können somit relativ um die lotrechte Achse des Gelenkbolzens gegenüber dem Pflugkörperhalteteil zur Arbeitsbreitenverstellung des Pflugkörpers verstellt werden. Der Verstellhebel kann an einem beweglichen und damit insbesondere verschwenkbaren Teil des Gelenkbolzens oder auch an dem Konsolenteil angreifen, um die Arbeitsbreitenverstellung durchführen zu können.

Bevorzugtermaßen sind an dem Pflugkörperhalteteil oder am Pflugrahmen ein Vorsprung oder mehrere Vorsprünge vorgesehen in einer Ausbildung, dass sie in die benachbarte Ausnehmung formschlüssig eingreifen. Damit ist für die Verbindung zwischen dem Pflugkörperhalterungsteil und dem Pflugrahmen eine entsprechende zentrierte Befestigungsmöglichkeit geschaffen, so dass mit einer einfachen Schraubverbindung das Pflugkörperhalterungsteil bzw. eine Pflugkörperhalterung insgesamt sicher mit dem Pflugrahmen zu verbinden ist, gleichwohl jedoch auch Kräfte sicher über diese Vorsprünge, die als Anlageelemente und Widerlager dienen, aufzufangen sind.

Weitere vorteilhafte Ausgestaltungen der Erfindung ergeben sich aus den weiteren Unteransprüchen, der nachfolgenden Beschreibung und der Zeichnung. In der Zeichnung zeigen:
- Fig. 1: eine schematische Seitenansicht auf ein Ausführungsbeispiel eines Drehpfluges nach der Erfindung;
- Fig. 2: ausschnittsweise in perspektivischer Darstellung einen Teilbereich des Pflugrahmens mit angedeuteter Pflugschar;
- Fig. 3: eine zu Fig. 2 analoge Darstellung aus einer anderen mehr von oben ausgerichteten Perspektive;
- Fig. 4: ein Teilausschnitt einer perspektivischen Darstellung auf den Pflugrahmen mit Pflugkörperhalterung (ohne Pflugschar);
- Fig. 5: eine perspektivische Darstellung schräg von oben auf das Ausführungsbeispiel nach Fig. 4 mit angedeutetem Pflugschar;
- Fig. 6: eine zu Fig. 5 analoge Darstellung,
- Fig. 7: eine Darstellung eines Teilbereich des Pflugrahmens in einer Ansicht schräg von oben;
- Fig. 8: eine Seitenansicht auf die Pflugkörperhalterung von der dem Pflugschar abgewandten Seite;
- Fig. 9: einen Teilausschnitt einer perspektivischen Darstellung eines Ausführungsbeispiels auf einen Drehpflug im Bereich der Anbindung des Pflugrahmens an dem Anbaubock für die Verbindung mit einem landwirtschaftlichen Zugfahrzeug;
- Fig. 10: vergrößert den Bereich des seitlich am Pflugrahmen angebauten Halterungsteiles des Anbaubockes;
- Fig. 11: eine zu Fig. 10 analoge Darstellung des Anbauteiles des Ausführungsbeispiels nach den Fig. 9 und 10 vor der Montage;
- Fig. 12: eine zu Fig. 11 analoge Darstellung von der gegenüberliegenden Seite betrachtet vor der Montage an dem Pflugrahmen, und
- Fig. 13: ein Ausführungsbeispiel eines verstellbar ausgebildeten Ansatzelements des Halterungsteiles oder des Pflugkörperhalteteils, das in eine entsprechende Ausnehmung innerhalb des Pflugrahmens einzusetzen ist.

In der Zeichnung sind grundsätzlich übereinstimmende Teile mit übereinstimmenden Bezugsziffern versehen.

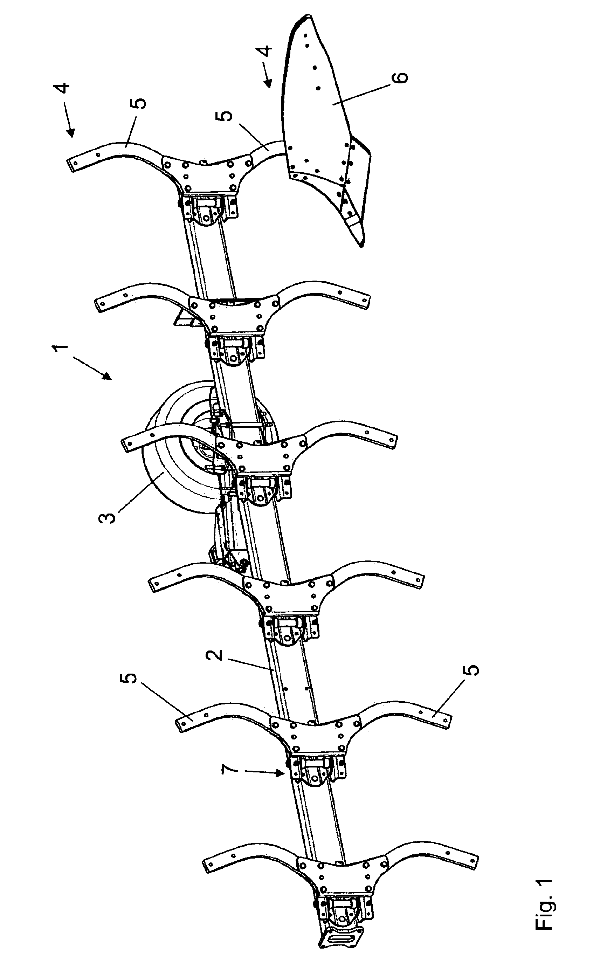

In Fig. 1 ist ein Ausführungsbeispiel eines allgemein mit 1 bezifferten Drehpfluges gezeigt, der über eine nicht im Einzelnen dargestellten Anbaubock an einen ebenfalls nicht im Einzelnen näher dargestellten landwirtschaftlichen Schlepper anhängbar ist und der einen Pflugrahmen 2 aufweist, der über ein Stützrad 3 auf dem Erdboden abzustützen ist. Der Pflugrahmen 2 trägt allgemein mit 4 bezifferte gegenüberliegende Pflugscharreihen mit am Pflugarmen 5 angeordneten Pflugkörpern 6, die gegenüberliegend an den Pflugrahmen 2 angeordnet sind. In dem Ausführungsbeispiel nach Fig. 1 ist nur ein Pflugkörper 6 angedeutet.

In der Darstellung nach Fig. 1 sind die unteren Pflugkörper 6 einer Pflugscharreihe 4 in der Arbeitsstellung. Durch eine Bewegung um 180° kann der Pflugrahmen 2 gedreht werden, so dass die gegenüberliegende Pflugscharreihe 4 mit daran montierten Pflugkörpern 6 in die Arbeitsstellung gelangen. Die dazu erforderlichen Teile wie Drehwelle, Zylindereinheiten sind aus Gründen der besseren Übersichtlichkeit nicht dargestellt.

Die Pflugkörper 6 und mithin die Pflugscharreihen 4 sind über die Pflugarme 5 an einer allgemein mit 7 bezifferten Pflugkörperhalterung an dem Pflugrahmen 2 befestigt. Wie im Einzelnen anhand weiterer Figuren noch dargestellt wird, ist die Pflugkörperhalterung 7 bei dem gezeigten Ausführungsbeispiel mehrteilig ausgebildet, und zwar dergestalt, dass sie den oberen Bereich des Pflugrahmens 2 genauso wie den unteren Bereich des Pflugrahmens 2 freilässt und sich nur an seitlichen in Fig. 1 dem Betrachter zugewandten Bereichen des Pflugrahmens 2 anschließt. Damit gehen im Alltagsbetrieb erhebliche Vorteile einher, da insbesondere die Pflugrahmenoberseite frei von Anbauten gestaltet ist mit erheblichen Vorteilen im rauhen Alltagseinsatz.

Wie im Einzelnen noch näher erläutert werden wird, sind die Pflugarme 5 mit den Pflugkörpern 6 um eine lotrechte Achse verschwenkbar und auch hinsichtlich ihrer Arbeitsbreite zu verstellen. Dies wird anhand der weiteren Darstellungen näher erläutert werden.

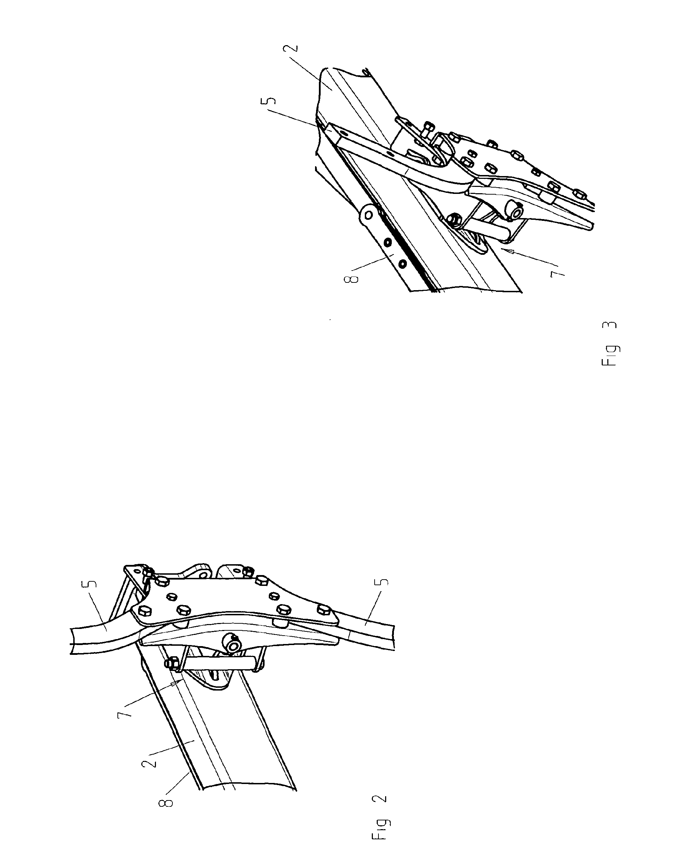

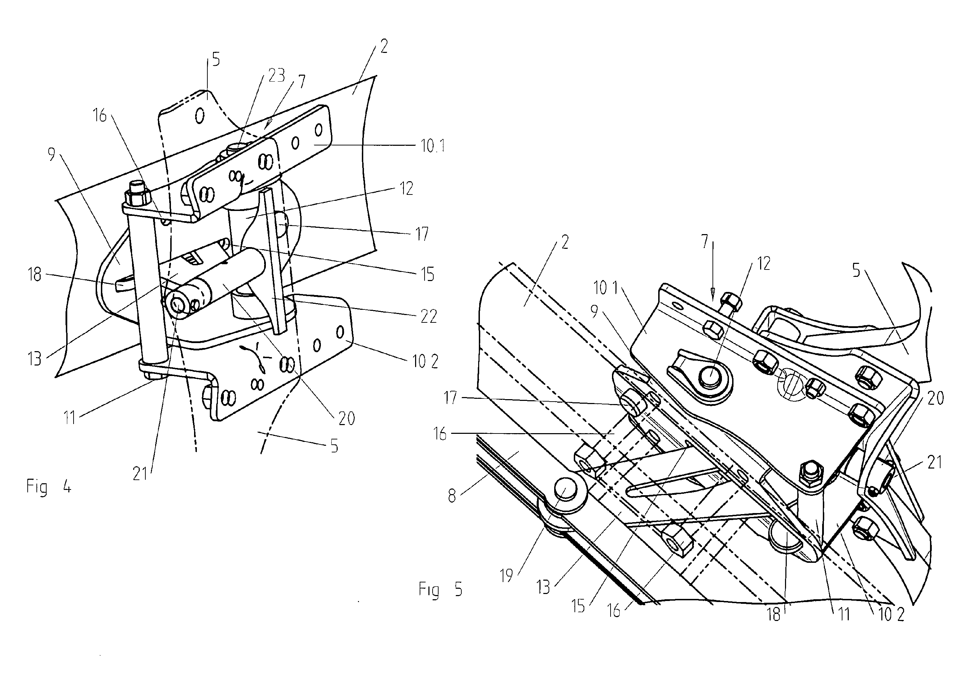

Wie die Fig. 2 und 3 zeigen, sind die Pflugkörper 6 und damit die Pflugscharreihen 4 und 5 über die Pflugkörperhalterung 7 an dem Pflugrahmen 2 befestigt. Fig. 3 zeigt, dass eine Verstellstange 8 seitlich neben dem Pflugrahmen 2 vorgesehen ist, um mithilfe von nicht gezeigten Stellzylindern die Arbeitsbreite des Pfluges 1 über eine Verstellung und damit um eine Verschwenkung der Pflugscharreihen 4 mit angeordneten Pflugkörpern 6 einzustellen. Die Pflugscharreihen bzw. die entsprechenden Halter 7 der Pflugkörper 6 sind über eine Befestigungsplatte mit der Pflugkörperhalterung 7 verschraubt. Die entsprechenden Teile sind näher aus den Fig. 4, 5 und 6 ersichtlich. Die Pflugkörperhalterung 7 besteht in dem dargestellten Ausführungsbeispiel aus mehreren Teilen, nämlich zunächst dem Pflugkörperhalteteil 9 und zwei mit Abstand zueinander angeordneten Konsolen 10.1 und 10.2, wobei 10.1 die obere Konsole und 10.2 die untere Konsole beziffert. Diese sind gegensinnig abgewinkelt, um dort über Schrauben, die in entsprechende Schraublöcher einzuführen sind, die Befestigungsplatte der Pflugarme 5 der Pflugschare 6 anzubinden. Die Konsolen 10.1 und 10.2 sind über eine Schraube 11 und über eine Bolzenhülsenbefestigung 12 miteinander verbunden. Die Bolzenhülsenbefestigung 12 definiert darüber hinaus eine lotrechte Achse, über die die Konsolen mit adaptierten Pflugscharen 4 und 5 relativ zu dem Pflugrahmen 2 zur Verstellung der Arbeitsbreite innerhalb eines vorgegebenen Schwenkweges zu verschwenken sind.

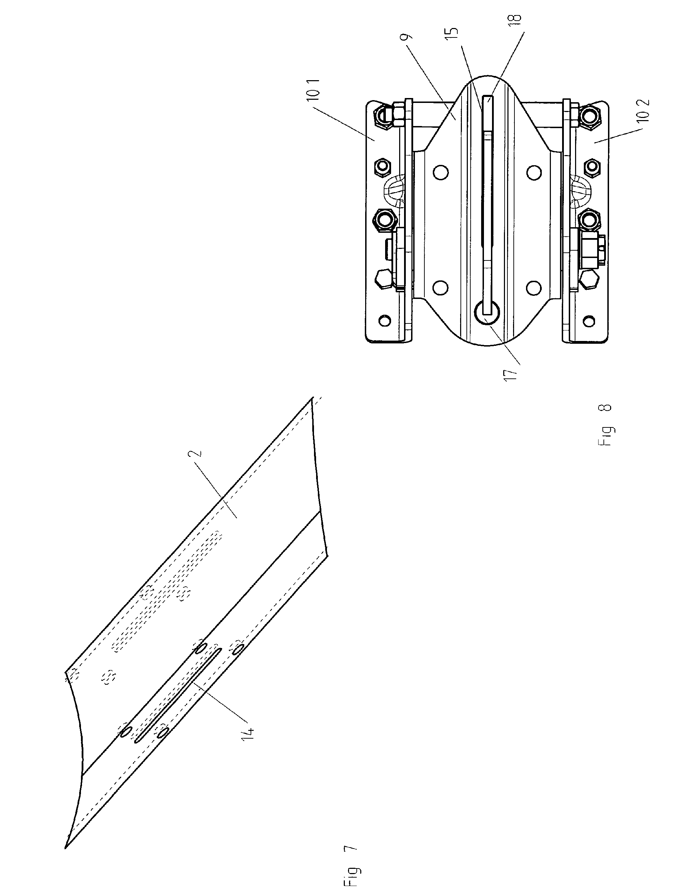

Dazu ist ein Hebel 13 vorgesehen, der eine Ausnehmung 14 (Fig. 7) durchsetzt. Des Weiteren ist in dem Pflugkörperhalteteil 9 ebenfalls eine Ausnehmung 15 vorgesehen, die von dem Hebel 13 ebenfalls durchsetzt ist. Wie aus Fig. 5 ersichtlich ist, ist der Hebel 13 gelenkig mit der Verstellstange 8 verbunden. Das Pflugkörperhalteteil 9 hat eine im Querschnitt im Wesentlichen U-förmige Gestalt und ist mit dem Pflugrahmenteil 2 verbunden, und zwar über Schrauben 16. Des Weiteren hat das Pflugkörperhalteteil 9 noch Vorsprünge 17 und 18, die in eine entsprechende Ausnehmung innerhalb des Pflugrahmens 2 und/oder die Ausnehmung 14 am Pflugrahmen 2 eingreifen, um ein Widerlager darzubieten, so dass das Pflugkörperhalteteil 9 nicht nur über die Schrauben 16 an dem Pflugrahmen 2 gesichert ist. Alternativ können auch am Pflugrahmen 2 entsprechende Vorsprünge vorgesehen sein, um in entsprechende Ausnehmungen am Pflugkörperhalteteil 9 einzugreifen.

In besonders vorteilhafter Weise ist der Hebel 13 beweglich mit der Bolzenhülseneinheit 2 und somit mit dem gegenüber den Pflugrahmen 2 verschwenkbaren Teil der Pflugkörperhalterung 7 verbunden, die durch die Konsolen 10.1 und 10.2 gebildet sind. Dazu ist der Hebel 13 an seiner der Gelenkstelle 19 an dem Verstellhebel 8 abgewandten Ende mit der im Wesentlichen horizontal ausgerichtete Achse 21 verbunden. Dieser Gelenkbolzen ist in einer Gelenkhülse angeordnet, die mit dem Bolzen/Hülsenteil 12 über einen Flansch 22 verbunden ist, so dass über den Hebel 13 die Verstellung der Konsolen 10.1 und 10.2 mitsamt der Gelenkbolzen-/Hülseneinheit 20 zu vollziehen ist, womit die Pflugscharreihen 4 und damit die Pflugarme 5 mit den die Pflugkörpern 6 zu verstellen sind.

Über die Achse 21 ist der Hebel 13 gegenüber der Pflugkörperhalterung 7 um die im Wesentlichen horizontal ausgerichtete Achse 23 beweglich und mithin auch gegenüber den die Pflugkörpern 6 tragenden Pflugarme 5. Gleichwohl ist der Hebel 13 innerhalb der Ausnehmung 14 bzw. der Ausnehmung 15 in dem Pflugkörperhalteteil 9 geführt, und zwar hinsichtlich der Anschläge, die sich links und rechts, bezogen auf die Darstellung nach Fig. 4 neben dem dargestellten Hebel 13 befinden, aber auch nach oben und unten, so dass die jeweilige Ausnehmung 14 am Pflugrahmen 2 bzw. die Ausnehmung 15 im Pflugkörperhalteteil 9 eine derartige Hocherstreckung hat, dass sich der Hebel 13 gegenüber der Pflugkörperhalterung 7 verschwenken und nach oben und unten bewegen lässt, jedoch nach einem bestimmten Schwenkweg nach oben und unten durch die jeweiligen Begrenzungswände der Ausnehmungen 14 und 15 auch wiederum Anschläge vorfindet, wodurch die Bewegung nach oben und unten hin begrenzt ist. So lassen sich Verspannungen in der beweglichen Verbindung zwischen dem Hebel 13 und der Pflugkörperhalterung 7 bzw. deren Teilen wirksam verhindern, was zu einem reparaturverminderten Betrieb des Drehpfluges führt.

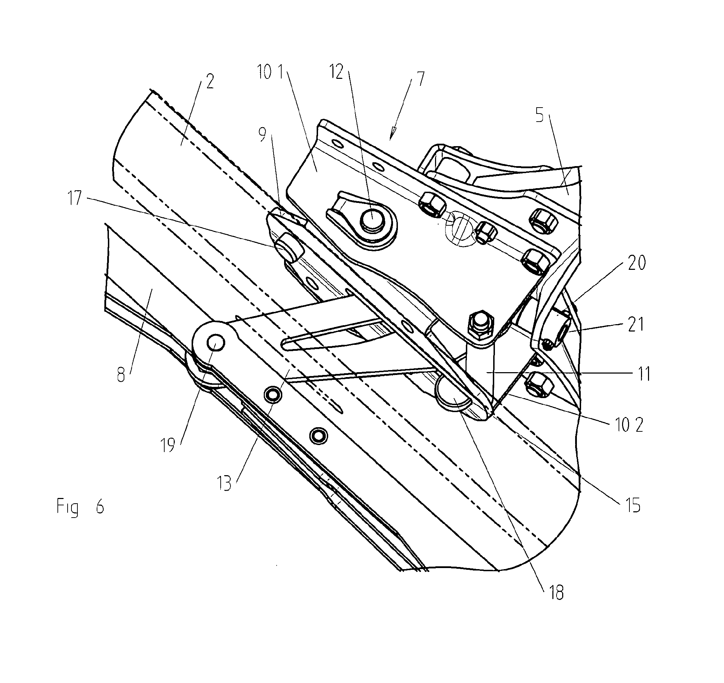

In den weiteren Darstellungen nach den Fig. 6, 7 und 8 sind die vorerwähnten Gestaltungsdetails in weiteren Ansichten noch näher dargestellt und mithin weiter verdeutlicht.

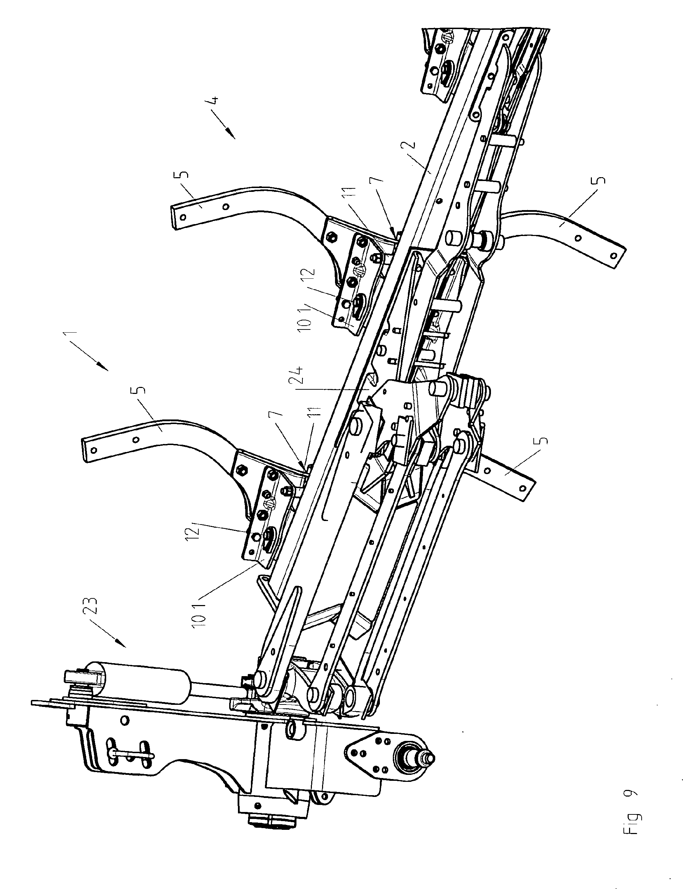

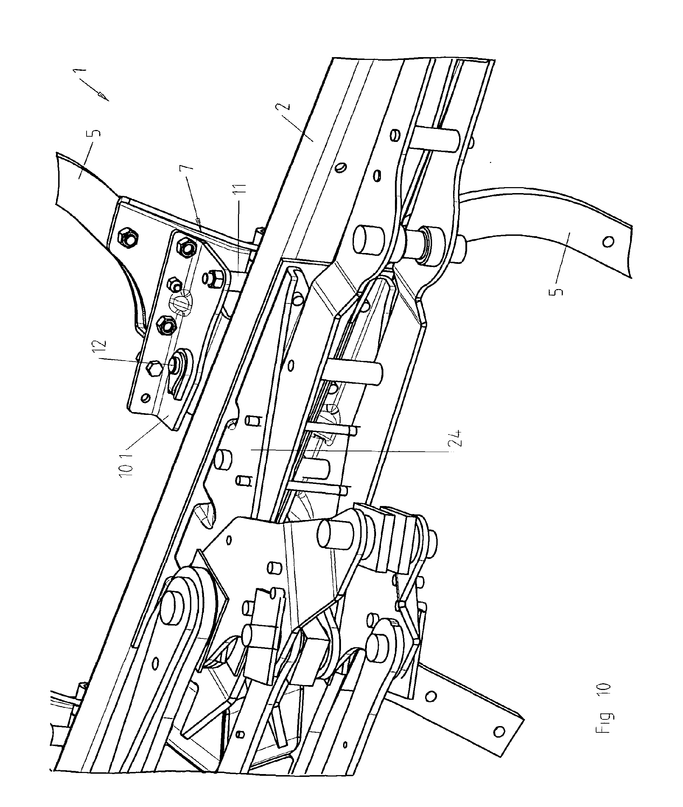

Neben den schon zuvor in den Figuren gezeigten Teilen der Pflugkörperhalterung 7 und der Pflugarme 5 der Pflugscharreihen 4 ist in den Fig. 9 bis 12 ein allgemein mit 23 bezifferter Anbaubock des Pfluges 1 gezeigt, der dazu dient, den Pflug 1 und damit den Pflugrahmen 2 mit einem landwirtschaftlichen Nutzfahrzeug, beispielsweise einem landwirtschaftlichen Schlepper, zu verbinden und dort z.B. einen Zapfwellenantrieb für die entsprechenden Dreh- und sonstigen Einstellungsbewegungen des Pfluges 1 anzubinden.

Der besseren Übersichtlichkeit wegen ist auf die nähere Gestaltung des Anbaubockes 23 an dieser Stelle verzichtet worden. Dieser soll jedoch technische Details aufweisen, die im Stand der Technik bekannt sind und mithin zahlreiche Vorbilder hat.

Wesentlich im Rahmen der vorliegenden Erfindung ist, dass dieser Anbaubock 23 ein Halterungsteil 24 hat, das auch wiederum an einer Seitenwandung des Pflugrahmens 2 angeflanscht ist, so dass die Ober- und Unterseite des als Vierkantrahmen ausgebildeten Pflugrahmens 2 frei von Anbauteilen auch von Verbindungsteilen des Pflugrahmens 2 ausgebildet ist. Da bereits die Pflughalterung 7 ebenfalls an einer Seitenwandung des Pflugrahmens 2 angebunden sind, ist somit insgesamt der Pflugrahmen 2 an seiner Ober- und an seiner Unterseite frei von jedweden Funktionsteilanbindungen, so dass etwaige dadurch bedingte und im Stand der Technik auftretende Verschmutzungen und Verstopfungsrisiken vermieden sind.

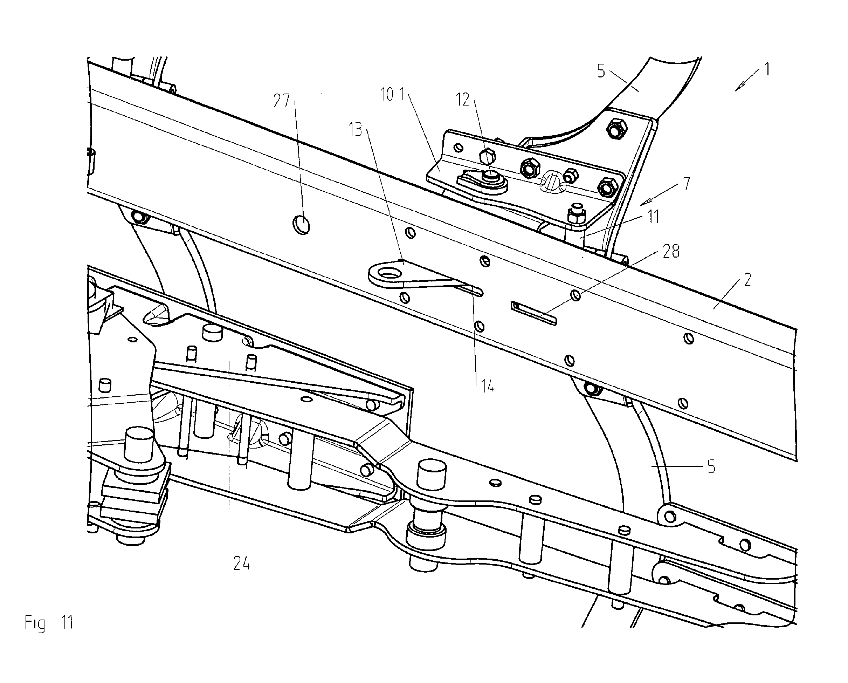

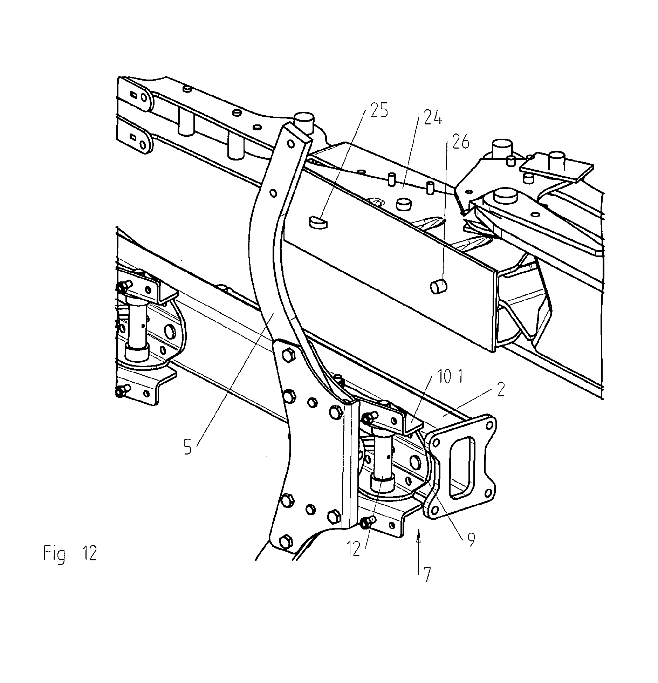

Das Halterungsteil 24 ist seinerseits mit einem oder mehreren Vorsprüngen bzw. Ansatzelementen 25 und 26 (Fig. 12) versehen, die in entsprechende Ausnehmungen 27 und 28 (Fig. 11) eingreifen können. Darüber hinaus ist das Halterungsteil 24 nach entsprechender Einführung der Vorsprünge 25 und 26 in die Ausnehmungen 27 und 28 am Pflugrahmen 28 über Schraubverbindungen oder dergleichen mit dem Pflugrahmen 2 verspannt. Durch die Ansatzelemente 25 und 26 lassen sich die entsprechenden Befestigungsverbindungen, also in aller Regel die Schraubverbindungen, wirksam entlasten.

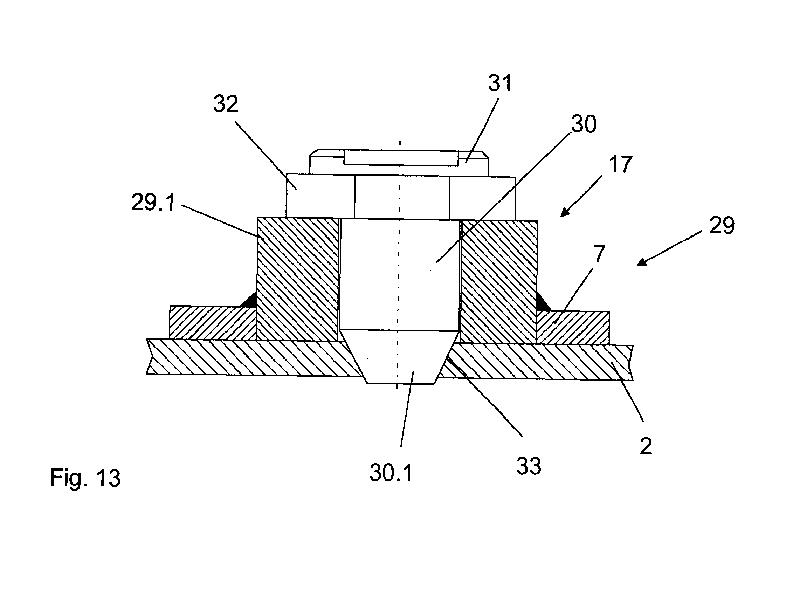

In Fig. 13 ist exemplarisch ein besonders gestaltetes Ansatzelement 29 gezeigt, das beispielsweise an dem Halterungsteil 24 oder aber auch an dem Pflugkörperhalteteil 27, vorgesehen sein kann. Exemplarisch ist dies dargestellt an dem Pflugkörperhalteteil 7. Das Pflugkörperhalteteil 7 ist mit Pflugrahmen 2 verbunden. Das Ansatzelement 29, das dem Ansatzelement 17 der Fig. 6 und 8 entsprechen soll, hat ein Buchsenteil 29.1, das ein Innengewinde aufweist, in das ein Schraubelement 30 mit einem Konusende 30.1 eingeschraubt ist, mit einem Fixierkonus 31 und einer Mutter 32. Somit ist das Schraubelement 30 lageveränderlich in der Ausnehmung 33 des Pflugrahmens gehalten, so dass der Vorsprung 29 bzw. 17 den individuellen Fertigungs- und Montageanforderungen durch eine Lageveränderung des Vorsprunges 30 individuell angepasst werden kann. So ist auch eine Vormontage und auch eine Endsicherung des Vorsprunges 17 bzw. 29 ermöglicht.

## Patentansprüche

1. Drehpflug (1) mit einem an einem Anbaubock zur Verbindung des Drehpfluges (1) mit einem landwirtschaftlichen Zugfahrzeug dreh- und/oder schwenkbar befestigbaren Pflugrahmen (2) und mit auf gegenüberliegenden Seiten des Pflugrahmens (2) angeordneten Pflugscharreihen (4, 5) mit Pflugkörpern (6), wobei durch eine über eine Antriebsvorrichtung eingeleitete Drehbewegung des Pflugrahmens (2) wahlweise die eine oder die andere Pflugscharreihe (4, 5) in ihre Betriebsstellung oder in ihre Außerbetriebsstellung überführbar ist und wobei die Pflugkörper (6) über Pflugkörperhalterungen (7) an dem Pflugrahmen (2) abgestützt befestigt, zur Einstellung der Pflugarbeitsbreite in den jeweiligen Arbeitsstellungen um eine im Wesentlichen lotrechte Achse (12) schwenkbar am Pflugrahmen (2) abgestützt und jeweils über einen eine Ausnehmung (14) des Pflugrahmens (2) durchsetzenden Hebel (13) verstellbar sind, **dadurch gekennzeichnet, dass** der die Ausnehmung (14) des Pflugrahmens (2) durchsetzende Hebel (13) beweglich mit zumindest einem Teil (10.1, 10.2) der Pflugkörperhalterung (7) verbunden ist.

2. Drehpflug nach Anspruch 1, **dadurch gekennzeichnet, dass** der Hebel (13) um eine in der Arbeitsstellung des Pflugkörpers (6) im Wesentlichen horizontal ausgerichtete Achse (21) schwenkbar mit zumindest einem Teil (10.1, 10.2) der Pflugkörperhalterung (7) verbunden ist.

3. Drehpflug nach Anspruch 2, **dadurch gekennzeichnet, dass** der die Ausnehmung (14) des Pflugrahmens (2) durchsetzende Hebel (13) um eine Achse (21) schwenkbar ist, die parallel oder annähernd parallel zu einer Seitenwandung des Pflugrahmens (2) ausgerichtet ist.

4. Drehpflug nach Anspruch 2 oder 3, **dadurch gekennzeichnet, dass** der Hebel (13) über einen die Achse (21) zwischen dem Hebel (13) und der Pflugkörperhalterung (7) aufweisenden Gelenkbolzen (20) mit der Pflugkörperhalterung (7) verbunden ist.

5. Drehpflug nach einem der Ansprüche 1 bis 4, **dadurch gekennzeichnet, dass** die Ausnehmung (14) innerhalb des Pflugrahmens (2) zur Anordnung des Hebels (13) eine die Bewegung des Hebels (13) um die in etwa horizontal ausgerichtete Achse (21) zulassende Hocherstreckung aufweist.

6. Drehpflug nach einem der Ansprüche 2 bis 5, **dadurch gekennzeichnet, dass** der die Ausnehmung (14) durchsetzende Hebel (13) mitsamt der Schwenkachse (21) derart mit der Pflugkörperhalterung (7) verbunden ist, dass die Achse (21) bei Einstellung der Pflugarbeitsbreite in der jeweiligen Arbeitsstellung eine Schwenkbewegung zumindest eines Teils der Pflugkörperhalterung (7) um die lotrechte Achse mitmacht.

7. Drehpflug nach einem der Ansprüche 1 bis 6, **dadurch gekennzeichnet, dass** die Pflugkörperhalterung (7) zwei mit Abstand zueinander angeordnete Konsolen (10.1, 10.2) aufweist, zwischen denen eine Hülse (12) mit Gelenkbolzen vorgesehen ist, die die lotrechte Achse zur Einstellung der Arbeitsbreite ausbilden, wobei ein Befestigungsteil (22) mit der Hülse (12) verbunden ist, an denen der Hebel (13) mit der im Wesentlichen horizontal ausgerichteten Achse (21) angreift.

8. Drehpflug nach einem der Ansprüche 1 bis 7, **dadurch gekennzeichnet, dass** an den beiden mit Abstand zueinander angeordneten Konsolen (10.1, 10.2) der Pflugkörperhalterung (7) der Pflugkörper (6) abgestützt ist.

9. Drehpflug nach Anspruch 8, **dadurch gekennzeichnet, dass** die beiden mit Abstand zueinander angeordneten Konsolen (10.1, 10.2) an einem Pflugkörperhalteteil (9) befestigt sind, das mit dem Pflugrahmen (2) verbunden ist.

10. Drehpflug nach einem der Ansprüche 1 bis 9, **dadurch gekennzeichnet, dass** das Pflugkörperteil (9) einen Befestigungsansatz aufweist, der in die Ausnehmung (14) des Pflugrahmens (2) eingreift.

11. Drehpflug nach Anspruch 11, **dadurch gekennzeichnet, dass** das Pflugkörperhalteteil (9) zwischen den beiden mit Abstand zueinander angeordneten Konsolen (10.1, 10.2) endseitige Halteschenkel aufweist und mit den beiden Konsolen (10.1, 10,2) verschraubt ist.

12. Drehpflug nach einem der Ansprüche 1 bis 10, **dadurch gekennzeichnet, dass** die Pflugkörperhalterung (7) oder ein Teil (14) der Pflugkörperhalterung (7) eine mit der Ausnehmung des Pflugrahmens (2) im Wesentlichen kongruierende Ausnehmung (15) aufweist zur Aufnahme des Hebels (13).

## Claims

1. Reversible plough (1), having a plough frame (2) which for connecting the reversible plough (1) to an agricultural tractor is rotatably and/or pivotably fastenable to an attachment block, and having ploughshare rows (4, 5), arranged on opposite sides of the plough frame (2), with plough bodies (6), wherein by way of a rotation movement of the plough frame (2), induced by way of a drive device, the one or the other ploughshare row as desired (4, 5) is transformable into its operating position or into its non-operating position, and wherein the plough bodies (6) are fastened in a supported manner to the plough frame (2) by way of plough-body mounts (7), for adjusting the plough operating width in the respective operational positions are supported on the plough frame (2) so as to be pivotable about a substantially vertical axis (12) and in each case are adjustable by a lever (13) which engages through a clearance (14) of the plough frame (2), **characterized in that** the lever (13) which engages through the clearance (14) of the plough frame (2) is movably connected to at least one part (10.1, 10.2) of the plough-body mount (7).

2. Reversible plough according to Claim 1, **characterized in that** the lever (13) is connected to at least one part (10.1, 10.2) of the plough-body mount (7) so as to be pivotable about an axis (21) which in the operational position of the plough body (6) is oriented in a substantially horizontal manner.

3. Reversible plough according to Claim 2, **characterized in that** the lever (13) which engages through the clearance (14) of the plough frame (2) is pivotable about an axis (21) which is oriented so as to be parallel or almost parallel with a side wall of the plough frame (2).

4. Reversible plough according to Claim 2 or 3, **characterized in that** the lever (13) is connected to the plough-body mount (7) by way of a fulcrum pin (20) which has the axle (21) between the lever (13) and the plough-body mount (7).

5. Reversible plough according to one of Claims 1 to 4, **characterized in that** for disposing the lever (13) the clearance (14) within the plough frame (2) has a vertical extent which permits movement of the lever (13) about the axle (21) which is oriented so as to be approximately horizontal.

6. Reversible plough according to one of Claims 2 to 5, **characterized in that** the lever (13) which engages through the clearance (14) together with the pivot axle (21) is connected to the plough-body mount (7) in such a manner that the axle (21) during adjustment of the plough operating width in the respective operating position participates in a pivot movement of at least part of the plough-body mount (7) about the vertical axis.

7. Reversible plough according to one of Claims 1 to 6, **characterized in that** the plough-body mount (7) has two consoles (10.1, 10.2) which are disposed so as to be mutually spaced apart and between which a sleeve (12) having a fulcrum pin which configures the vertical axis for adjustment of the operating width is provided, wherein a fastening part (22) is connected to the sleeve (12), the lever (13) engaging thereon by way of the axle (21) which is oriented so as to be substantially horizontal.

8. Reversible plough according to one of Claims 1 to 7, **characterized in that** the plough-body mount (7) of the plough bodies (6) is supported on the two mutually spaced apart consoles (10.1, 10.2).

9. Reversible plough according to Claim 8, **characterized in that** the two mutually spaced apart consoles (10.1, 10.2) are fastened to a plough-body retaining part (9) which is connected to the plough frame (2).

10. Reversible plough according to one of Claims 1 to 9, **characterized in that** the plough-body part (9) has a fastening appendage which engages into the clearance (14) of the plough frame (2).

11. Reversible plough according to Claim 11, **characterized in that** the plough-body retaining part (9) between the two mutually spaced apart consoles (10.1, 10.2) has end-side retaining legs and is screwed to the two consoles (10.1, 10.2).

12. Reversible plough according to one of Claims 1 to 10, **characterized in that** for receiving the lever (13) the plough-body mount (7), or a part (14) of the plough-body mount (7), has a clearance (15) which is substantially congruent with the clearance of the plough frame (2).

## Revendications

1. Charrue Brabant (1) équipée d'un châssis de charrue (2) pouvant être fixé de façon pivotante et/ou basculante à un support en saillie en vue de réaliser la jonction de la charrue Brabant (1) à un tracteur agricole et avec des rangées de soc de charrue (4, 5) équipées de corps de charrue (6) et disposées sur les côtés opposés du châssis de charrue (2), la première ou l'autre rangée de soc de charrue (4, 5) pouvant être transférées au choix dans leur position de fonctionnement ou dans leur position hors fonctionnement par un mouvement de rotation du châssis de charrue (2) introduit par un dispositif d'entraînement et les corps de charrue (6) étant fixés de manière maintenue au châssis de charrue (2) via les fixations de corps de charrue (7), étant maintenus au niveau du châssis de charrue (2) de façon à pouvoir basculer autour d'un axe (12) pour l'essentiel d'aplomb pour régler la largeur de travail de la charrue dans les positions de travail respectives et étant réglables respectivement via un levier (13) traversant un évidement (14) du châssis de charrue (2), **caractérisée en ce que** le levier (13) traversant l'évidement (14) du châssis de charrue (2) est relié de façon mobile à au moins une pièce (10.1, 10.2) de la fixation de corps de charrue (7).

2. Charrue Brabant selon la revendication 1, **caractérisée en ce que** le levier (13) est relié à au moins une pièce (10.1, 10.2) de la fixation de corps de charrue (7) de façon à pouvoir basculer autour d'un axe (21) orienté pour l'essentiel horizontalement dans la position de travail du corps de charrue (6).

3. Charrue Brabant selon la revendication 2, **caractérisée en ce que** le levier (13) traversant l'évidement (14) du châssis de charrue (2) peut pivoter autour d'un axe (21) orienté parallèlement ou approximativement parallèlement à une paroi latérale du châssis de charrue (2).

4. Charrue Brabant selon la revendication 2 ou 3, **caractérisée en ce que** le levier (13) est relié à la fixation de corps de charrue (7) via un goujon articulé (20) comportant l'axe (21) entre le levier (13) et la fixation de corps de charrue (7).

5. Charrue Brabant selon l'une quelconque des revendications 1 à 4, **caractérisée en ce que** l'évidement (14) comporte à l'intérieur du châssis de charrue (2) en direction de l'agencement du levier (13) une extension en hauteur permettant le mouvement du levier (13) autour de l'axe (21) orienté approximativement horizontalement.

6. Charrue Brabant selon l'une quelconque des revendications 2 à 5, **caractérisée en ce que** le levier (13) traversant l'évidement (14) est relié de telle sorte, conjointement avec l'axe de basculement (21), à la fixation de corps de charrue (7) que l'axe (21) accompagne, lors du réglage de la largeur de travail de charrue dans la position de travail respective, un mouvement de basculement d'au moins une partie de la fixation de corps de charrue (7) autour de l'axe d'aplomb.

7. Charrue Brabant selon l'une quelconque des revendications 1 à 6, **caractérisée en ce que** la fixation de corps de charrue (7) comporte deux consoles (10.1, 10.2) disposées à une certaine distance l'une de l'autre entre lesquelles un fourreau (12) pourvu d'un goujon articulé est prévu formant l'axe d'aplomb pour régler la largeur de travail, une pièce de fixation (22) étant reliée au fourreau (12) au niveau duquel le levier (13) engrène l'axe (21) orienté pour l'essentiel horizontalement.

8. Charrue Brabant selon l'une quelconque des revendications 1 à 7, **caractérisée en ce que** la fixation de corps de charrue (7) des corps de charrue (6) est maintenue au niveau des deux consoles (10.1, 10.2) disposées à une certaine distance l'une de l'autre.

9. Charrue Brabant selon la revendication 8, **caractérisée en ce que** les deux consoles (10.1, 10.2) disposées à une certaine distance l'une de l'autre sont fixées à une pièce d'arrêt de corps de charrue(9) reliée au châssis de charrue (2).

10. Charrue Brabant selon l'une quelconque des revendications 1 à 9, **caractérisée en ce que** la pièce de corps de charrue (9) comporte un appendice de fixation s'engrenant dans l'évidement (14) du châssis de charrue (2).

11. Charrue Brabant selon la revendication 11, **caractérisée en ce que** la pièce d'arrêt de corps de charrue (9) comporte des arêtes d'arrêt disposées du côté d'extrémité, entre les deux consoles (10.1, 10.2) disposées à une certaine distance l'une de l'autre, et qu'elle est vissée aux deux consoles (10,1, 10.2).

12. Charrue Brabant selon l'une quelconque des revendications 1 à 10, **caractérisée en ce que** la fixation de corps de charrue (7) ou une partie (14) de la fixation de corps de charrue (7) comporte un évidement (15) pour l'essentiel congru avec l'évidement du châssis de charrue (2) pour loger le levier (13).
